(19) Europäisches Patentamt
European Patent Office
Office européen des brevets

(11) Veröffentlichungsnummer: **0 227 980 B1**

(12) # EUROPÄISCHE PATENTSCHRIFT

(45) Veröffentlichungstag der Patentschrift: **09.10.91**

(51) Int. Cl.[5]: **C09B 5/62**, C08K 5/34

(21) Anmeldenummer: **86116988.6**

(22) Anmeldetag: **06.12.86**

Die Akte enthält technische Angaben, die nach dem Eingang der Anmeldung eingereicht wurden und die nicht in dieser Patentschrift enthalten sind.

(54) **Fluoreszierende aroxysubstituierte Perylen-3,4,9,10-tetracarbonsäurediimide und ihre Verwendung zur flächenmässigen Konzentrierung von Licht.**

(30) Priorität: **19.12.85 DE 3545004**

(43) Veröffentlichungstag der Anmeldung:
**08.07.87 Patentblatt 87/28**

(45) Bekanntmachung des Hinweises auf die Patenterteilung:
**09.10.91 Patentblatt 91/41**

(84) Benannte Vertragsstaaten:
**CH DE FR GB IT LI**

(56) Entgegenhaltungen:
**DE-A- 3 235 526**
**DE-A- 3 413 418**
**DE-C- 749 495**

(73) Patentinhaber: **BASF Aktiengesellschaft**
**Carl-Bosch-Strasse 38**
**W-6700 Ludwigshafen(DE)**

(72) Erfinder: **Seybold, Günther, Dr.**
**Friedrich-Ebert-Strasse 14**
**W-6708 Neuhofen(DE)**
Erfinder: **Stange, Andreas, Dr.**
**Kantstrasse 8**
**W-6800 Mannheim 1(DE)**

EP 0 227 980 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Vorrichtungen, in denen Sichtbares Licht durch in Kunststoff eingearbeitete Fluoreszenzfarbstoffe konzentriert werden kann, sind z.B. aus den DE-OS 26 20 115 und 25 54 226 bekannt. Dafür geeignete Fluoreszenzfarbstoffe sind nach den DE-OS 30 01 857 und 32 35 526 u.a. solche auf der Basis von Perylentetracarbonsäurediimiden, die nach der DE-OS 34 13 418 auch in Farbstofflasern eingesetzt werden können.

Die fluoreszierenden Verbindungen müssen für die Umwandlung von Lichtenergie in elektrische oder thermische Energie eine hohe Lichtechtheit aufweisen, damit die in der Regel aus transparenten Kunststoffen bestehenden Vorrichtungen eine für die Anwendung ausreichende Lebensdauer haben.

Darüber hinaus ist es für die Umwandlung von Licht in elektrische Energie besonders vorteilhaft, wenn die verwendeten Verbindungen eine gute Trennung von Absorptions- und Emissionsbanden in dem bei der Anwendung verwendeten Medium aufweisen. Weiterhin ist es von Vorteil, wenn sie einzeln oder in Kombination mit anderen Fluoreszenzfarbstoffen einen möglichst breiten Teil des sichtbaren Sonnenlichtes absorbieren und als Fluoreszenzlicht abgeben.

Entscheidend für den Wirkungsgrad bei der Lichtkonzentrierung ist zudem die Löslichkeit des Fluoreszenzfarbstoffs im Anwendungsmedium, also z.B. in der Polymermatrix. Jedes streuende Partikel führt nämlich zu einer Störung der Lichtleitung durch Auslenkung von Licht in unerwünschte Richtungen.

Aufgabe der vorliegenden Erfindung war es, für die bekannten Vorrichtungen zur Lichtkonzentrierung geeignete Verbindungen bereitzustellen, die eine hohe Fluoreszenz, gute Löslichkeit im Anwendungsmedium bei gleichzeitig hoher Lichtechtheit und einen breiten Absorptionsbereich aufweisen.

Es wurde nun gefunden, daß man bei der flächenmäßigen Konzentrierung von Licht in Kunststoffplatten oder -folien hervorragende Ergebnisse erzielt, wenn man Perylen-3,4,9,10-tetracarbonsäurediimide der allgemeinen Formel (I)

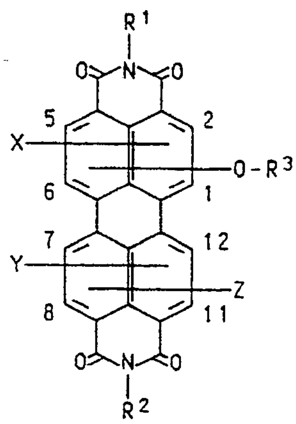

(I)

verwendet, in der die Substituenten folgende Bedeutung haben:

$R^1$ und $R^2$ gleiche oder verschiedene aliphatische, cycloaliphatische, aromatische oder heterocyclische Reste, die frei von wasserlöslich machenden Gruppen sind,

X, Y, Z Chlor, Brom oder einen Rest $OR^3$ und

$R^3$ Phenyl, das durch Cyano, Nitro, Halogen und/oder $C_1$-$C_{18}$-Alkyl substituiert sein kann, 2-Phenylphenyl, 4-Cyanophenyl-o-nitrophenyl, 2-Cyclohexyl-4-methylphenyl, 2- und 4-Cyclohexylphenyl, Benzylphenyl, 2-Benzyl-4-chlorphenyl, Naphthyl oder Anthryl.

Von besonderer Bedeutung sind Verbindungen der Formel (II)

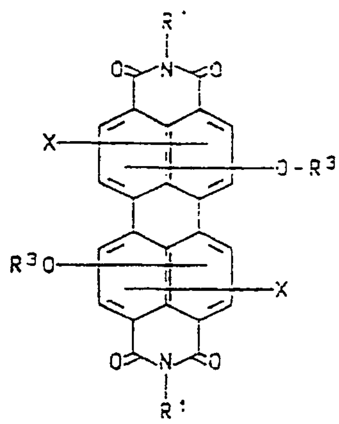

(II),

in der
$R^1$ und $R^3$ die angegebene Bedeutung haben und
X Chlor oder ein Rest $OR^3$ ist.

Technisch besonders wertvoll sind Verbindungen, bei denen die Reste X und $OR^3$ in den 1-, 6-, 7- und 12-Stellungen stehen.

Die Verbindungen der Formeln (I) und (II) zeigen je nach Art und Anzahl der Substituenten eine bathochrome Verschiebung der Absorptions- und/oder Emissionsbanden gegenüber den entsprechenden im Perylenkern unsubstituierten Perylen-3,4,9,10-tetracarbonsäurediimiden. Dabei ist die bathochrome Verschiebung um so stärker, je mehr Substituenten $OR^3$ vorhanden sind. D. h. somit, das Fluoraszenzmaximum kann in einem Wellenlängenbereich von 550 -630 nm eingestellt werden, wodurch eine optimale Anpassung der fluoreszierenden Verbindungen (I) und (II) an die photovoltaischen Systeme möglich ist.

Überraschenderweise haben die erfindungsgemäßen Verbindungen (I) und (II) zudem sehr viel breitere Absorptions- und Emissionsbanden als die im Perylenkern unsubstituierten Verbindungen.

Die Verbindungen der Formeln (I) und (II) sind zudem in den üblicherweise für die Konzentrierung von Licht verwendeten Materialien sehr lichtecht und wandeln Licht in einem breiten Wellenlängenbereich in hoher Ausbeute in Fluoreszenzlicht um.

Hervorzuheben ist außerdem die hohe Temperaturstabilität in den als Anwendungsmedien üblicherweise Verwendeten Polymeren. So sind z.B. Ausfärbungen in Polystyrol und Polymethylmethacrylat bis 300 °C thermostabil. Außerdem zeichnen sich die erfindungsgemäßen Verbindungen durch eine sehr hohe Löslichkeit im Substrat und organischen Lösungsmitteln, darunter sogar in Paraffinöl aus.

Als Substituenten $R^1$ und $R^2$, die gleich oder verschieden sein können, kommen aliphatische, cycloaliphatische oder aromatische sowie heterocyclische Reste in Betracht, wobei diese Reste keine wasserlöslich machenden Gruppen haben dürfen.

Aliphatische Reste sind z.B. $C_1$- bis $C_{18}$-Alkyl, das linear oder verzweigt gegebenenfals durch -O-, -S- oder

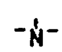

unterbrochen sowie substituiert sein kann.

Als Substituenten sind dabei z.B. $C_1$- bis $C_{18}$-Alkoxy, $C_1$- bis $C_{18}$-Alkylthio, Hydroxy, Alkanoyloxy, cycloaliphatische Gruppen, heterocyclische Gruppen, Phenyl, Phenoxy und/oder Phenylthio zu nennen. Bei mehr als einem Substituenten können diese gleich oder verschieden sein. Die Zahl der Substituenten am Alkyl ist vorzugsweise 0 oder 1.

Als cycloaliphatische Reste kommen für $R^1$ und $R^2$ solche mit 1 bis 6 carbocyclischen Ringgliedern in Betracht, wobei diese Reste in der Regel 4 bis 30 C-Atome aufweisen. Die cycloaliphatischen Reste können z.B. durch eine oder mehrere der folgenden Gruppen substituiert sein: Hydroxy, $C_1$-bis $C_5$-Alkyl, Methoxy, Ethoxy, $C_1$-oder $C_2$-Alkylthio; $C_1$-bis $C_{18}$-Alkanoyloxy oder $C_1$- bis $C_8$-Alkoxycarbonyl. Die cycloaliphatischen Reste leiten sich z.B. vom Cyclohexan, von Diels-Alder-Addukten von Cyclopentadien oder Cyclohexadien als Dien und $C_2$- bis $C_{18}$-Alkenen, Cyclopentenen, Cyclohexenen, gegebenenfalls substituierten Enolethern oder ungesättigten Carbonsäuren als dienophiler Komponente ab.

Als aromatische und heterocyclische Reste, die keine wasserlöslich machenden Gruppen enthalten, kommen für $R^1$ und $R^2$ z.B. in Betracht:

a) Reste der Formel (III)

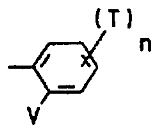 (III),

in der

V Wasserstoff, Fluor, Chlor, Brom, $C_1$- bis $C_8$-, vorzugsweise $C_1$- bis $C_4$-Alkyl, Phenyl oder

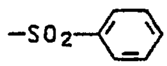 ,

n 0, 1 oder 2 und

T Fluor, Chlor, Brom, $C_1$- bis $C_4$-Alkyl, -NHCOR[4], -CONHR[5] oder

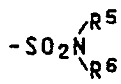

bedeuten, wobei

R[4] für $C_1$- bis $C_4$-Alkyl oder Phenyl,

R[5] für Wasserstoff, $C_1$- bis $C_4$-Alkyl oder Phenyl,

R[6] für Wasserstoff oder $C_1$- bis $C_4$-Alkyl und der Rest

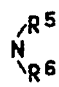

für einen gesättigten 5- oder 6-gliedrigen heterocyclischen Ring, der gegebenenfalls -O-, -S- oder N-R[7] als Ringglied enthält, stehen, wobei R[7] Wasserstoff oder $C_1$- bis $C_4$-Alkyl ist und wobei für n = 2

die Substituenten gleich oder verschieden sein können.

Die Phenylgruppen in T können gegebenenfalls durch Fluor, Chlor oder Brom substituiert sein, wobei die Zahl der Substituenten bis zu 3, vorzugsweise 1 oder 2 ist;

b) Reste der Formel

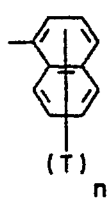 , 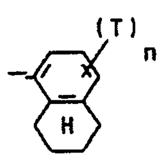 oder 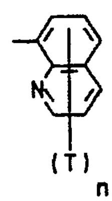

(IVa) (IVb) (V)

in denen T und n die vorstehend angegebene Bedeutung haben;

Pyrazolyl-(5)-reste der Formel

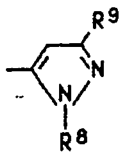

(VI) ,

in der $R^8$ $C_1$-$C_{12}$-Alkyl, Furfuryl-(2), Phenyl oder $C_7$- bis $C_{10}$-Phenalkyl, wobei die Phenylreste gegebenenfalls durch Chlor, Brom oder $C_1$-$C_4$-Alkyl substituiert sein können und die Zahl der Substituenten bis zu 3, vorzugsweise 1 oder 2, ist und $R^9$ Wasserstoff oder Methyl bedeuten.

d) Benzisothiazolyl-(3) der Formel

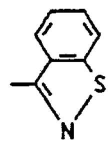

(VII).

Im einzelnen sind für $R^1$ und $R^2$ z.B. zu nennen:

1. gegebenenfalls substituiertes Alkyl:

1.1 Ethyl, n- oder i-Propyl, Methyl, n-Butyl, sec.-Butyl, i-Butyl, Pentyl, Hexyl, 2,3-Dimethylbutyl, Neopentyl, Heptyl, 2-Methylhexyl, 3-Methylhexyl, n- oder i-Octyl, 2-Ethylhexyl, 6-Methylheptyl-(2), 1- oder 2-Nonyl, 1- oder 2-Decyl, 2-Methylnonyl-(1) , 2-Methylnonyl-(2), Undecyl, Dodecyl, Tridecyl, Tetradecyl, Hexadecyl oder Octadecyl.

1.2 Benzyl, 2-Phenylethyl, 2- oder 3-Phenylpropyl, 3- oder 4-Phenylbutyl, Phenylthioethyl, 2- oder 3-Phenylthiopropyl, 2-Phenoxyethyl oder 2-oder 3-Phenoxypropyl.

1.3 $-(CH_2CH_2O)p-R^{10}$ oder $-(CH_2)_3-(OCH_2-CH_2-)p-OR^{10}$ mit $R^{10}$ = H, $-CH_3$, $-C_2H_5$, $-CH(CH_3)_2$, $-C_4H_9$ (n) und

p = 1, 2, 3, 4, oder 5;

$-(CH_2)_3-OR^{11}$ mit $R^{11}$ = $C_1$- bis $C_{13}$-Alkyl, wie Methyl, Ethyl, n- oder i-Propyl, n- oder i-Butyl, Pentyl, n-Hexyl, n-Octyl oder 2-Ethylhexyl, Dodecyl, Tridecyl, Decyl oder 2-Ethylbutyl,

oder 2-Dodecylthioethyl;

1.4 2-Hydroxyethyl, 2-Hydroxypropyl, 3-Hydroxy-2,2-dimethylpropyl-(1), 8-Hydroxy-8-methyl-nonyl-(2) oder 4-Hydroxybutyl-(2);

1.5 2,3-Dimethyl-4-stearoyloxy-butyl-(1) oder -(2), 3-Stearoyloxy-2,2-dimethylpropyl-(1), 2-(3'-Heptanoyloxy)-2-methyl-nonyl-(8), 2-Stearoyloxy-2-methyl-(8), 4-(3'-Heptanoyloxy)-butyl-(2), 4-Stearoyloxybutyl-(1), 4-Butanoyloxy-butyl-(2), 4-(2'-Butanoyloxy)-butyl-(2), 8-Butanoyloxy-8-methylnonyl-(2), 8-(2'-Butanoyloxy)-8-methylnonyl-(2), 4-Acryloyloxybutyl-(1), 4-Methacryloyloxy-butyl-(1), 2,3-Dimethyl-4-acryloyloxy-butyl-(1) oder 2,3-Dimethyl-4-methacryloyloxy-butyl-(1);

1.6 3-Cyanopropyl-(2) , 3-Cyano-2-methyl-propyl-(1); 1-Cyancyclohexyl oder 3-Cyano-2-methylpropyl-(2);

1.7 2-Cyclohexylethyl, Cyclohexylmethyl, Bicyclooctylmethyl, Adamantylmethyl, Adamantylethyl oder Norbornylmethyl;

1.8 2-Furanylmethyl, 2-Thiophenylmethyl, 2'-Pyridylethyl-(2) oder 2-Pyridylmethyl;

2. Als cycloaliphatische Reste kommen z.B. in Betracht:

2.1 2,6-Diisopropylcyclohexyl, 2,6-Dimethylcyclohexyl, 3,3,5- und 2,4,6-Trimethylcyclohexyl, 2,6-Bistrifluormethylcyclohexyl, 1-Carboethoxycyclohexyl-(1), 1-Carbomethoxycyclohexyl-(1), 4-Isopropylcyclohexyl, 4-Methylcyclohexyl, Cyclooctyl oder 2,8-Diisopropylcyclooctyl;

2.2 Bicyclo-[2,2,2]-octyl, Dicyclopentadienyl, Tricyclo-$[0^{2,10}]$-decyl, Adamantyl, Pinanyl, Norbornyl, Bornyl oder Decahydroanthryl-(10).

3. Als aromatische und heterocyclische Reste kommen z.B. in Betracht:

3.1 Phenyl und Reste der Formel (III), die sich vom Anilin ableiten:

2-Methylphenyl, 2,3-, 2,4-, 2,5-, 2,6- oder 3,5-Dimethylphenyl, 2,4,6-Trimethylphenyl, 2-Methyl-5-chlorphenyl, 2-Methyl-4-chlorphenyl, 2-Methyl-4-methoxyphenyl, 2,5-Dimethyl-4-methoxyphenyl, 2-Methyl-4-methoxy-5-chlorphenyl, 2-Methyl-5-(dimethylsulfamoyl)phenyl, 2-Äthylphenyl, 2,6-Diäthylphenyl, 2,6-Diäthyl-4-methylphenyl, 2-Isopropylphenyl, 2,4-, 2,5- und 2,6-Diisopropylphenyl, 2-n-Butylphenyl, 2-sec-Butylphenyl, 2-n-Pentylphenyl, 2-n-Hexylphenyl, 2-(2'Methylpentyl)-phenyl, 2-n-Octylphenyl, 2-Methoxyphenyl, 2-Äthoxyphenyl, 2,5-Dimethoxyphenyl, 2,5-Diäthoxyphenyl, 2,4-Dimethoxyphenyl, 2,4-Dimethyl-5-chlorphenyl, 2,4-Diäthoxyphenyl, 2,3-Dimethoxyphenyl, 2,3-Diäthoxyphenyl, 2,3-Methylendioxyphenyl, 2-Methoxy-5-acetylaminophenyl, 2-Methoxy-4-acetylaminophenyl, 2-Methoxy-5-chlorphenyl, 2-Methoxy-5-chlorphenyl, 2-Methoxy-5-(N-phenylcarbamoyl)-phenyl, 2-Methyl-5-(4'-Methoxybenzoyl)-aminophenyl, 2-Phenylphenyl, 2-Phenylsulfonyl-phenyl, 2-Chlorphenyl; 2,3-, 2,4-, 2,5- oder 2,6-Dichlorphenyl, 2,4,5- oder 2,4,6-Trichlorphenyl, 2-Bromphenyl, 2,5-Dichlor-4-benzoylamino-phenyl, 2,5-Dichlor-4-propionylamino-phenyl, 2-Chlor-4 -N-methylsulfamoylphenyl, 2-Chlor-4-sulfopyrrolidido-phenyl, 2,5-Dichlor-4-N,N-dimethylsulfamoyl-phenyl, 2-Chlor-4-methoxyphenyl, 2-Chlor-4-äthoxyphenyl, 4-Methoxyphenyl, 4-Ethoxyphenyl, 2-tert.-Butylphenyl oder 2,4- oder 2,5-di-tert.-Butylphenyl;

3.2 Reste der Formeln (IVa), (IVb) und (V), die sich vom 1-Naphthylamin, bzw. 8-Aminochinolin ableiten, d.h. Naphthyl-(1), 5,6,7,8-Tetrahydronaphthyl-(1) oder Chinolyl-(8).

3.3 Pyrazolyl-(5)-reste der Formel (VI):

1-Methylpyrazolyl-(5); 1-Äthylpyrazolyl-(5), 1-n-Butylpyrazolyl-(5); 1-(2'-Äthylhexyl)-pyrazolyl-(5); 1-Phenylpyrazolyl-(5), 1-(4'-Chlorphenyl)-pyrazolyl-(5); 1-Phenyl-3-methyl-pyrazolyl-(5); 1-(4'-Chlorphenyl)-3-methyl-pyrazolyl-(5); 1-Benzylpyrazolyl-(5); 1-(2'-Phenylpropyl)-pyrazolyl-(5), 1-(2'-Chlorbenzyl)-pyrazolyl-(5), 1-(2',6'-Dichlorbenzyl)-pyrazolyl-(5), 1-(2',3'-Dimethoxybenzyl)-pyrazolyl-(5), 1-(2'-Methoxybenzyl)-pyrazolyl-(5) oder 1-(Furfuryl-2)-pyrazolyl-(5);und

3.4 Benzisothiazolyl-(3).

Von den für $R^1$ und $R^2$ genannten Resten sind solche bevorzugt, die als Substituenten kein Brom enthalten.

Besonders bevorzugt sind als Reste $R^1$ und $R^2$ Phenylreste, die in ortho-Stellung ein- oder insbesondere zweimal substituiert sind, z.B. durch $C_1$- bis $C_5$-Alkyl und/oder Chlor und Neopentyl.

Im einzelnen sind folgende bevorzugte Reste $R^1$ und $R^2$ zu nennen:

Neopentyl, 2-Methylphenyl, 2,3-, 2,4-, 2,5- oder 2,6-Dimethylphenyl, 2,4,6-Trimethylphenyl, 2-Äthylphenyl, 2,6-Diäthylphenyl, 2-Isopropylphenyl, 2,4-, 2,5- oder 2,6-Di-isopropylphenyl, 2-tert.-Butylphenyl, 2,4- oder 2,5-Di-tert.-butylphenyl, 2-Methoxyphenyl, 2-Chlorphenyl, 2,4-, 2,5- oder 2,6-Dichlorphenyl, 2-Phenylsulfophenyl, 2,5-Dichlor-4-benzoylaminophenyl, 2-Chlor-4N-methylsulfamoyl-phenyl oder 2,5-Dichlor-4-N,N-dimethylsulfamoyl-phenyl.

X, Y, Z stehen vorzugsweise für Chlor oder einen Rest $OR^3$, wobei $R^3$ vor allem Phenyl, durch Cyano, Nitro, Halogen und/oder Alkyl mit 1 bis 18 C-Atomen substituiertes Phenyl, Naphthyl und Anthryl bedeuten.

Im einzelnen sind z.B. für $R^3$ zu nennen:

Phenyl, 2-, 3- oder 4-Fluorphenyl, 2-, 3- oder 4-Chlorphenyl, 2-, 3- oder 4-Bromphenyl, 2-, 3- oder 4-tert.-Butylphenyl, 2-Phenylphenyl, 2-Isopropyl-4-methylphenyl, 2,3-, 2,4-, 2,5- oder 2,6-Dichlorphenyl, 2,4,5- oder 2,4,6-Trichlorphenyl, 2-, 3- oder 4-Methylphenyl, 2,3-, 2,4-, 2,5-, 2,6-oder 3,5-Dimethylphenyl, 2,5,6-Trimethylphenyl, 2-Methyl-4-chlorphenyl, 2-Methyl-5-chlorphenyl, 2-Methyl-6-chlorphenyl, 2-Ethylphenyl, 2,6-Diethylphenyl, 2,6-Diethyl-4-methylphenyl, 2-Isopropylphenyl, 4-n-Dodecylphenyl, 4-Chlor-2-nitrophenyl, 4-Cyanophenyl-o-nitrophenyl, 2-Chlor-5-nitrophenyl, 3-Methyl-4-chlorphenyl, 2-Methyl-4-nitrophenyl, 3-Methyl-4-nitrophenyl, 4-Methyl-2-nitrophenyl, 2-Cyclohexyl-4-methylphenyl, 2-Cyclohexylphenyl, 4-Cyclohexylphenyl, 2-, 3- und 4-Benzylphenyl, 2-Benzyl-4--chlorphenyl, 4-n-Propylphenyl oder 4-n-Butylphenyl.

Aufgrund besonderer Vorteile in den anwendungstechnischen Eigenschaften sind besonders bevorzugt Verbindungen der Formel II, in denen

- $R^1$ 2-mono- oder 2,6-disubstituierte Phenylreste wie 2,6-Diisopropylphenyl, 2,6-Dimethylphenyl, 2,4,6-Trimethylphenyl, 2,6-Diethylphenyl, 2,4-Diisopropylphenyl, 2,6-Dimethyl-4-octylphenyl, 2,6-Dimethyl-4-tridecylphenyl, 2,6-Bistrifluormethylphenyl, Naphthyl-(1), Anthryl-(9), 9-(2' ,6'-Diisopropylphenyl)-anthryl-(10), 2-tert.-Butylphenyl, 2,4- oder 2,5-Di-tert.Butylphenyl oder Alkylreste wie Neopentyl, Octyl, Butyl, 2-Heptyl, 2-Ethylhexyl-(1), 4-(Stearoyloxy)-butyl-(2) oder 4-(Stearoyloxy)-butyl-(1) bedeutet,
- X Chlor oder $-OR^3$ ist und
- $R^3$ die vorgenannten Bedeutungen hat.

Die Verbindungen der Formel I und II können nach an sich bekannten Verfahren z.B. zunächst durch Halogenierung von Perylen-3,4,9,10-tetracarbonsäureanhydridzum Tetrahalogenperylen-3,4,9,10-tetracarbonsäureanhydrid hergestellt werden. Durch anschließende Umsetzung des Tetrahalogenperylen-3,4,9,10-tetracarbonsäureanhydrids mit Aminen der Formeln $R^1$-$NH_2$ und $R^2$-$NH_2$ können substituierte Tetrahalogenperylimide erhalten werden, die bei Austausch der Halogenatome mit Verbindungen der Formel $R^3$-OH die Verbindungen der Formeln (I) und (II) liefern.

Als Halogenierungsmittel besonders bevorzugt ist Chlor. Der zuvor geschilderte Herstellungsweg bietet gegenüber der in der DE-OS 32 35 526 beschriebenen Herstellung den Vorteil, daß definiert im Perylenkern

chlorierte Tetrachlorperylimide erhalten werden können, die dann zu den Aroxyperylimiden der Formeln (I) und (II) umsetzbar sind. Dies gilt auch wenn die Substituenten $R^1$ und $R^2$ chlorierbar sind. Nach dem in der DE-0S 32 35 526 beschriebenen Herstellungsweg würden Perylimide mit chlorierbaren Resten $R^1$ und $R^2$ bei der Chlorierung zu undefiniert chlorierten Polychlorperylimiden reagieren.

Die Verfahrensprodukte werden, falls es erforderlich ist, noch gereinigt und gegebenenfalls in ihre Komponenten getrennt, z.B. durch fraktioniertes Fällen aus konzentrierter Schwefelsäure, durch Umkristallisieren aus hochsiedenden, leicht entfernbaren Lösungsmitteln oder durch Auskochen mit Lösungsmitteln unter Mahlbedingungen. Die Reinigung kann auch mit Hilfe chromatographischer Trennverfahren unter atmosphärischem Druck oder Oberdruck erfolgen.

Falls es erforderlich ist, wird das Reinigungsverfahren ein- oder mehrfach wiederholt. Es können auch verschiedene Reinigungsverfahren kombiniert werden, um sehr reine Verbindungen (I) oder (II) zu erhalten.

Zur Anwendung werden die erfindungsgemäßen Verbindungen in der Regel in für die Anwendung geeignete Kunststoffe eingearbeitet. Hierzu wird der Kunststoff als Granulat mit der benötigten Menge an (I) bepudert und die Granulate dann zu Flächengebilden extrudiert. Die Einarbeitung in den Kunststoff kann auch durch Eindiffundieren der benötigten Menge an (I) oder durch Zugabe der benötigten Menge an (I) zum Monomeren des Kunststoffes mit anschließender Polymerisation zum Kunststoff erfolgen.

Als Kunststoffe (Medium) kommen für eine Verwendung zur Lichtkonzentration für Solarzellen vorzugsweise Polymethylmethacrylat, Polymethylacrylat, Polystyrol oder Polydiethylenglykol-diallylbiscarbonat, ferner auch geeignete Polyamide und Polycarbonate in Betracht.

Wegen der guten Löslichkeit der Verbindungen in organischen Lösungsmittel können die Verbindungen auch dann angewendet werden, wenn die Kunststoffplatten im Gießverfahren hergestellt werden.

Die Lichtsammelsysteme können z.B. in Verbindung mit Solarzellen zur Nutzbarmachung der Sonnenenergie und in Szintillatoren bekannter Art [s. z.B. J.B. Birks: The Theory and Practice of Scintillation Counting, Pergamon Press, Londen 1964; J. Opt. Am. 39, 912 (1949); J. Appl. Phys. 40, 3544 (1969), Nuclear Instruments a. Methods 87, 111 bis 123 (1970); Research Disclosure, s. 43 (1977); DE-OS 26 29 641)] Verwendung finden. Darüber hinaus eignen sie sich in Verbindung mit elektronischen Steuerungen als Anzeigevorrichtung mit sehr geringem Energieverbrauch. Weiterhin eignen sie sich ohne elektronische Bauteile für vielerlei Anzeige-, Hinweis- und Markierungszwecke, z.B. in passiven Anzeigeelementen, Hinweis- und Verkehrszeichen wie Ampeln und in Zeichengeräten.

Die erfindungsgemäßen Verbindungen können weiterhin als Laserfarbstoffe verwendet werden.

Die Erfindung soll durch die folgenden Beispiele weiter erläutert werden. Die im folgenden angegebenen Teile und Prozentangaben beziehen sich auf das Gewicht.

Beispiel 1

In 1000 Teile N-Methylpyrrolidon werden 169,6 Teile 1,6,7,12-Tetrachlor-N,N'-2,6-Diisopropylphenylperylen-3,4,9,10-tetracarbonsäurediimid und 71,4 Teile Natriumphenolat eingetragen, dann wird 0,5 Stunden bei Raumtemperatur nachgerührt. Anschließend wird 14 Stunden auf 40 °C erhitzt. Nach einer Filtration wird das Reaktionsgemisch in Wasser gegeben, abfiltriert und der Rückstand mit verdünnter Salzsäure und Wasser gewaschen und getrocknet. Nach dem Umkristallisieren aus Ethanol erhält man 120 Teile des Fluoreszenz-Farbstoffs der Formel

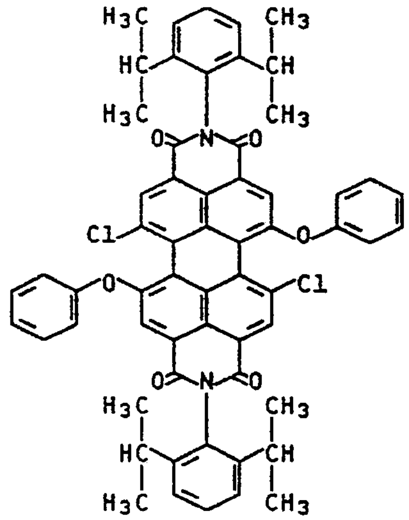

Schmp.: 266 °C
λmax Absorption: 566 nm (in $CHCl_3$)
λmax Emission: 605 nm (in $CHCl_3$)
Φ = 0,99 (in $CHCl_3$).

Die Herstellung der als Ausgangsprodukt für 1,6,7,12-Tetrachlor-N,N'-2,6-diisopropylphenyl-perylen-3,4,9,10-tetracarbonsäurediimid benötigten 1,6,7,12-Tetrachlorperylen-3,4,9,10-tetracarbonsäure kann nach der in der DE-PS 412 122 angegebenen Methode erfolgen.

Beispiel 2

In 900 Teile N-Methylpyrrolidon werden unter Stickstoffatmosphäre 67,8 Teile 1,6,7,12-Tetrachlor-N,N'-2,6-Diisopropylphenyl-perylen-3,4,9,10-tetracarbonsäurediimid, 31,7 Teile Phenol und 33,1 Teile gemahlene Pottasche eingetragen. Anschließend wird 2 Stunden bei 110 °C gerührt, dann abgekühlt und bei 40 - 50 °C über Quarzsand filtriert. Der Farbstoff wird aus der Reaktionslösung mit einer Mischung aus Eisessig/Ethanol/Wasser gefällt. Nach der Filtration wird mit Wasser neutral gewaschen und bei 80 °C im Vakuum getrocknet. Man erhält 78 Teile des Fluoreszenzfarbstoffs der Formel

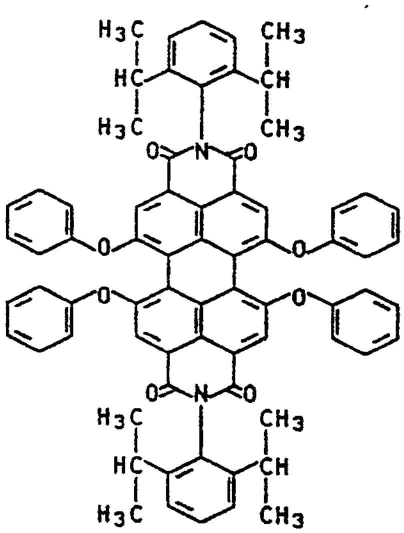

Schmp.: > 300 °C
λmax Absorption: 579 nm (in $CHCl_3$)
λmax Emission: 613 nm (in $CHCl_3$)
Φ = 0,96

Bei den folgenden Beispielen verfährt man wie in Beispiel 2 angegeben und setzt jeweils die Tetrachlorperylimide A mit den Phenolen B zu den Tetraaryloxyperylimiden C um.

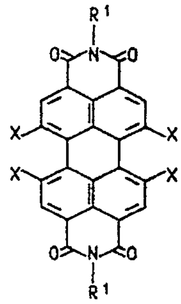

(VIII)

| Bsp. | A Formel (VIII) | | B | C Formel (VIII) | | Schmp. von C | $\lambda$max Ext. inkl. von C in $CHCl_3$ [nm] | $\lambda$max Emission von C in $CHCl_3$ [nm] | $\Phi$ |
|---|---|---|---|---|---|---|---|---|---|
| | $R^1$ | X | | $R^1$ | X | | | | |
| 3 | 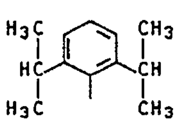 | Cl | 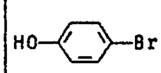 | 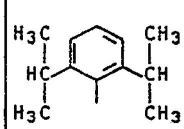 | 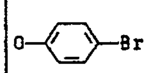 | >300°C | 572 | 607 | 1,0 |
| 4 | 〃 | Cl | 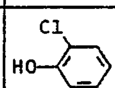 | 〃 | 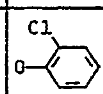 | >300°C | 571 | 602 | 0,96 |
| 5 | 〃 | Cl | 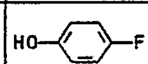 | 〃 | 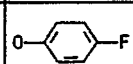 | >300°C | 578 | 610 | 1,0 |
| 6 | 〃 | Cl | 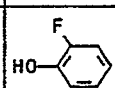 | 〃 | 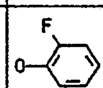 | >300°C | 572 | 602 | 0,99 |
| 7 | 〃 | Cl | 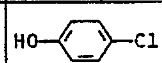 | 〃 | 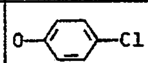 | >300°C | 574 | 607 | 0,98 |
| 8 | 〃 | Cl | 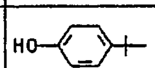 | 〃 | 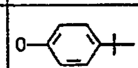 | >300°C | 588 | 621 | 1,0 |
| 9 | 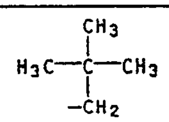 | Cl | 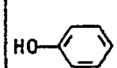 | 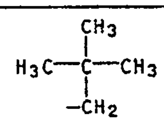 | 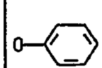 | >300°C | 576 | 614 | 1,0 |
| 10 | 〃 | Cl | 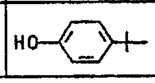 | 〃 | 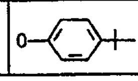 | >300°C | 584 | 620 | 0,98 |

Anwendungsbeispiel 1

In geschmolzenem Polymethylmethacrylat werden 0.01 % des Farbstoffs aus Beispiel 1 gelöst, homogen verteilt und zu Fluoreszenzplatten verarbeitet.

Anwendungsbeispiel 2

1000 Teile Polymethylmethacrylat (Granulat) werden mit 0.01 Teilen des Farbstoffs aus Beispiel 2 gleichmäßig bepudert. Das Gemisch wird anschließend zu Platten extrudiert.

Anwendungsbeispiele 3 bis 25

Entsprechend den Anwendungsbeispielen 1 oder 2 werden Fluoreszenzplatten oder -folien hergestellt:

| Anwendungsbeispiel | Farbstoff aus Beispiel | Material |
|---|---|---|
| 3 | 3 | Polymethylmethacrylat |
| 4 | 4 | Polymethylmethacrylat |
| 5 | 5 | Polymethylmethacrylat |
| 6 | 6 | Polymethylmethacrylat |
| 7 | 7 | Polymethylmethacrylat |
| 8 | 8 | Polymethylmethacrylat |
| 9 | 9 | Polymethylmethacrylat |
| 10 | 10 | Polymethylmethacrylat |
| 11 | 2 | Polyvinylchlorid |
| 12 | 2 | Polystyrol |
| 13 | 2 | Polycarbonat |
| 14 | 1 | Polyethylen |
| 15 | 2 | Polyethylen |
| 16 | 4 | Polyethylen |
| 17 | 8 | Polyethylen |
| 18 | 1 | Polyvinylchlorid |
| 19 | 1 | Polystyrol |
| 20 | 1 | Polycarbonat |
| 21 | 6 | Polyethylen |
| 22 | 6 | Polyvinylchlorid |

## Patentansprüche

**1.** Verbindungen der allgemeinen Formel (I)

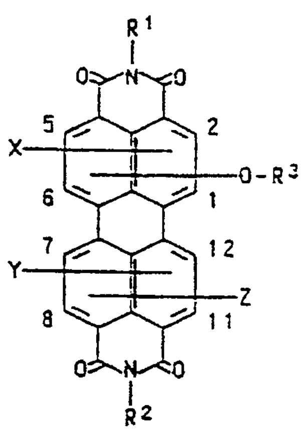

(I) ,

in der die Substituenten folgende Bedeutung haben:

$R^1$ und $R^2$ gleiche oder verschiedene aliphatische. cycloaliphatische, aromatische oder heterocyclische Reste, die frei von wasserlöslich machenden Gruppen sind,

X,Y,Z Chlor, Brom oder einen Rest $OR^3$ und

$R^3$ Phenyl, das durch Cyano, Nitro, Halogen und/oder $C_1$-$C_{18}$-Alkyl substituiert sein kann, 2-Phenylphenyl, 4-Cyanophenyl-o-nitrophenyl, 2-Cyclohexyl-4-methylphenyl, 2- und 4-Cyclohexylphenyl, Benzylphenyl, 2-Benzyl-4-chlorphenyl, Naphthyl oder Anthryl.

2. Verbindungen nach Anspruch 1 der allgemeinen Formel (II)

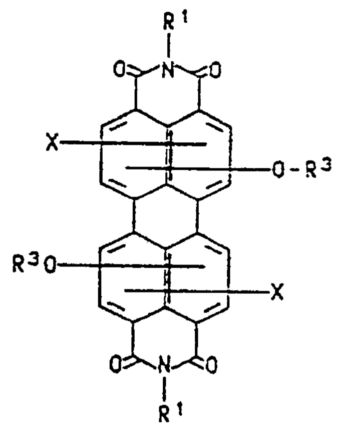

(II) ,

in der
$R^1$ und $R^3$ die im Anspruch 1 angegebene Bedeutung haben und X Chlor oder $-OR^3$ ist.

3. Verbindungen nach Anspruch 1, in denen die Reste X, Y, Z und $OR^3$ in den 1-, 6-, 7- und 12-Stellungen stehen.

**Claims**

1. A compound of the formula I

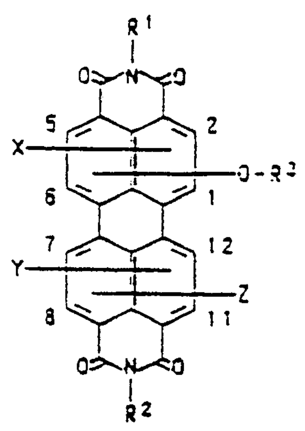

(I)

where
$R^1$ and $R^2$ are identical or different aliphatic, cycloaliphatic, aromatic or heterocyclic radicals which are free of groups which impart water solubility,
X, Y and Z are each chlorine, bromine or a radical $OR^3$ and $R^3$ is phenyl, which may be substituted by cyano, nitro, halogen or $C_1$-$C_{18}$-alkyl, or is 2-phenylphenyl, 4-cyanophenyl-o-nitrophenyl, 2-cyclohexyl-4-methylphenyl, 2- or -4-cyclohexylphenyl, benzylphenyl, 2-benzyl-4-chlorophenyl, naphthyl or anthryl.

2. A compound as claimed in claim 1, of the formula II

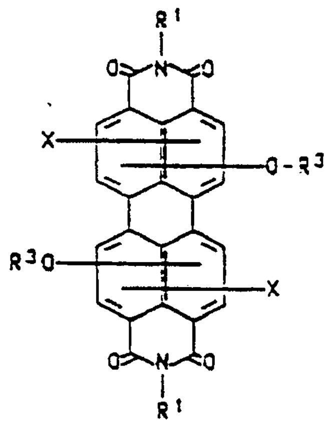

(II)

where
$R^1$ and $R^3$ have the meanings stated in claim 1 and X is chlorine or $-OR^3$.

**3.** A compound as claimed in claim 1, wherein X, Y, Z and $OR^3$ are in the 1, 6, 7 and 12 positions.

## Revendications

**1.** Composés de la formule générale (I)

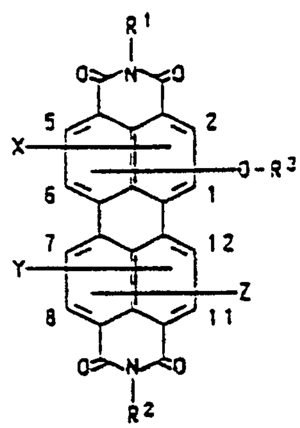

(I)

dans laquelle les substituants ont la signification suivante :

$R^1$ et $R^2$ des restes aliphatiques, cycloaliphatiques, aromatiques ou heterocycliques, identiques ou différents, qui sont exempts de groupes rendant solubles à l'eau

X, Y, Z, chlore, brome ou un reste $OR^3$ et,

$R^3$, phényle, qui peut être substitué par cyano, nitro, halogène et/ou alkyle en $C_1$-$C_{18}$, 2-phénylphényle, 4-cyanophényl-o-nitrophényle, 2-cyclohexyl-4-méthylphényle, 2- et 4-cyclohexylphényle, benzylphényle, 2-benzyl-4-chlorophényle, naphtyle ou anthryle,

**2.** Composés selon la revendication 1 de la formule générale (II)

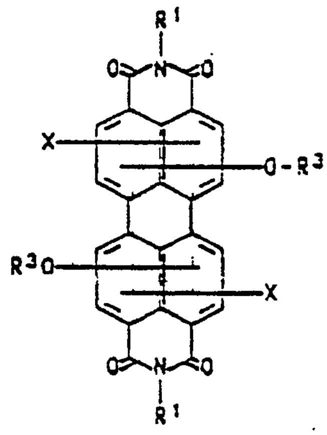

(II)

dans laquelle

$R^1$ et $R^3$ ont la signification indiqué dans la revendication 1 et X est chlore ou O-$R^3$.

**3.** Composés selon la revendication 1 dans laquelle les restes X, Y, Z et $OR^3$ se trouvent en position 1-, 6-, 7- et 12.